# FASCICULE DE BREVET EUROPEEN

(11) **EP 0 860 385 B1**
(45) Date de publication et mention de la délivrance du brevet: **22.11.2000**
(21) Numéro de dépôt: 98440027.5
(22) Date de dépôt: 16.02.1998
(51) Int. Cl.: B65G 47/08, B65G 47/84

(54) **Dispositif pour la formation de lots de produits et la séparation desdits lots entre eux, et réciproquement, en vue de leur conditionnement**
Vorrichtung zum Gruppieren von Gegenständen und Separieren dieser Gruppen von einander, und gegenseitig, zum Zwecke ihrer Verpackung
Device for forming groups of products and separating such groups from each other, and mutually, in view of packaging them

(30) Priorité: 14.02.1997 FR 9701921
(43) Date de publication de la demande: 26.08.1998
(73) Titulaire: A.P.I. SA, 10120 Saint Germain (FR)
(72) Inventeur: Flix, Jean-Marie, 10120 Saint-Germain (FR)
(74) Mandataire: Arbousse-Bastide, Jean-Claude Philippe

(56) Documents cités:
- EP-A- 0 191 158
- DE-A- 2 605 775
- US-A- 4 164 997
- US-A- 5 191 964

## Description

La présente invention a pour objet un dispositif pour la formation de lots de produits et la séparation desdits lots entre eux, et réciproquement, en vue de leur conditionnement.

On connaît actuellement des systèmes de séparation de produits à l'aide de vis à pas variables, mais celles-ci ne peuvent former des lots que sous la forme d'une rangée d'unités ou de plusieurs rangées placées côte à côte avec un écart relativement important entre elles, et non des lots de produits groupés.

On connaît également des dispositifs tels que celui décrit dans le brevet FR-A-2 710 317, qui comprend une courroie de transfert tendue entre deux roues d'entraînement d'axes verticaux et munie de moyens de fixation régulièrement espacés, destinés chacun à la solidarisation d'un chariot comportant un élément de séparation et de maintien, de type coiffe, mobile en translation verticale et ayant pour fonction de couvrir un certain nombre de produits pour en former un lot, une vis à pas variable permettant de créer progressivement un espace croissant entre lesdits chariots, et donc entre les lots successifs.

Toutefois ce type de dispositif présente l'inconvénient d'un encombrement important, du fait de la mise en oeuvre d'une vis à pas variable.

Le document EP-A-0 191 158 décrit un dispositif pour la formation de lots de produits en vue de leur conditionnement, destiné à être positionné à la sortie d'un convoyeur d'amenée des produits disposés sur plusieurs rangées. Ce dispositif comprend un arbre mu en rotation par un moyen moteur et pourvu de secteurs munis de découpes dont chacune est apte à venir en prise avec l'un des produits amenés par le convoyeur, de manière que chaque secteur forme un lot de produits.

Dans ce dispositif la vitesse des secteurs, fixés sur l'arbre à distance les uns des autres, est accélérée au moyen de cames solidaires desdits secteurs, en vue de réaliser les lots de produits en continu, sans perte de temps.

Ce dispositif présente l'inconvénient d'un encombrement important, et l'inconvénient supplémentaire que les secteurs ne peuvent être déplacés indépendamment les uns des autres, ce qui limite les possibilités de fonctionnement du dispositif.

La présente invention a pour but de remédier à ces inconvénients en proposant un dispositif qui permet de former des lots de produits et de séparer lesdits lots, et réciproquement, tout en présentant un encombrement notablement inférieur à celui des dispositifs existants.

Le dispositif selon l'invention, destiné à être positionné à la sortie d'un convoyeur d'amenée des produits disposés sur une seule rangée, comprend au moins deux arbres concentriques, dont chacun, indépendamment de l'autre, est mu en rotation par un moyen moteur actionné par un système de commande, et est équipé d'un secteur qui lui est solidarisé perpendiculairement et qui est pourvu à son extrémité libre de plusieurs découpes dont chacune est apte à venir en prise avec un des produits amenés par le convoyeur, de manière à former un lot de plusieurs produits, les paramètres de vitesse et d'accélération de chacun desdits secteurs, qui se déplacent l'un après l'autre, étant déterminés par le système de commande suivant les différentes phases de formation et de séparation des lots, à savoir:
- durant la phase de formation d'un lot une vitesse nominale permettant à l'un des secteurs de saisir un lot de produits tout en imposant sa vitesse au déplacement des produits sur le convoyeur d'amenée ;
- durant la phase de séparation du lot formé par ce premier secteur une accélération espaçant ledit secteur du secteur qui le précède et qui se trouve en phase de formation d'un autre lot, et amenant ledit premier secteur à une vitesse déterminée qui lui permet de transférer le lot, après un trajet d'environ 180°, à un convoyeur de sortie;
le cycle de 360° se terminant en communiquant à nouveau au premier secteur la vitesse nominale de saisie des produits, et ainsi de suite.

Selon une caractéristique additionnelle de l'invention le dispositif comprend en outre un disque, d'axe parallèle aux arbres porteurs des secteurs, disposé tangentiellement auxdits secteurs, entre ces derniers et le convoyeur de sortie, et comportant des découpes similaires à celles desdits secteurs, permettant de transférer les lots de produits sur le convoyeur de sortie dans un sens d'avancement identique à celui du convoyeur d'amenée des produits.

Les lots de produits ainsi formés sont transportés par le convoyeur de sortie et pris en charge par des moyens de maintien tels que des taquets solidaires d'une chaîne ou courroie avançant le long dudit convoyeur de sortie.

Les avantages et les caractéristiques de la présente invention ressortiront plus clairement de la description qui suit et qui se rapporte au dessin annexé, fourni à titre de simple illustration de l'invention, vis-à-vis de laquelle il ne présente aucun caractère limitatif.

Dans le dessin annexé :
- la figure 1 représente une vue schématique en perspective d'un dispositif selon l'invention.
- les figures 2a, 2b, et 2c représentent des vues schématiques en plan des différentes phases de fonctionnement du dispositif selon l'invention.
- la figure 3 représente une vue en plan du dispositif selon l'invention associé à deux autres dispositifs identiques pour former des lots de produits sur trois rangées.

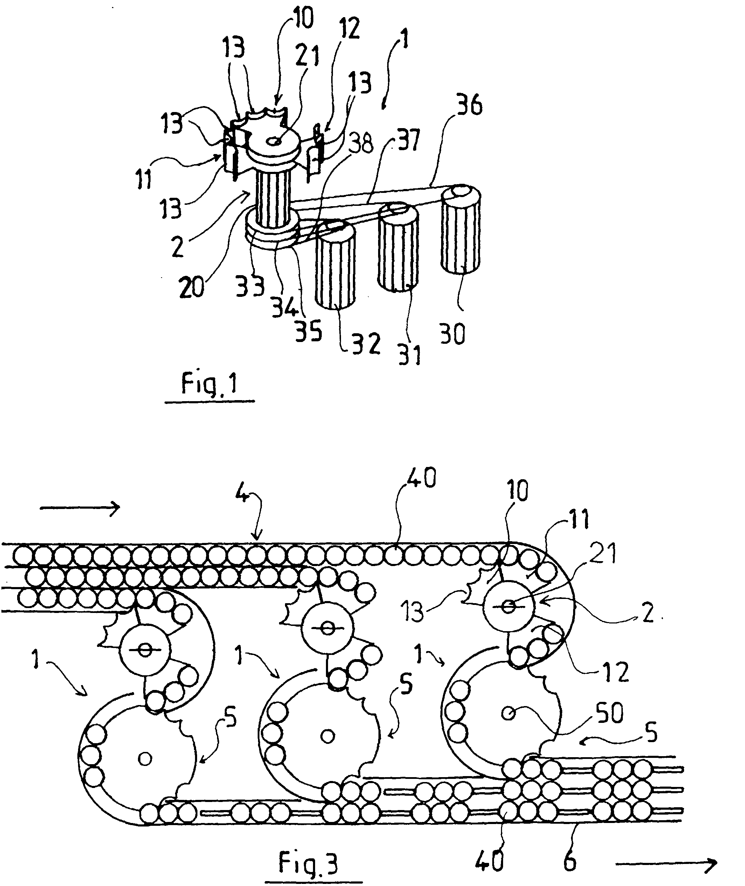

Si on se réfère à la figure 1 on peut voir qu'un dispositif 1 selon l'invention comprend trois secteurs 10,11,12 identiques solidarisés chacun perpendiculairement à l'extrémité supérieure d'un arbre 2, seul l'arbre 20 externe étant visible sur la figure. Les arbres 2 sont disposés concentriquement par rapport à leur axe de rotation 21 et sont de longueur croissante depuis l'arbre extérieur de plus grand diamètre jusqu'à l'arbre intérieur de plus petit diamètre, en sorte que les secteurs 10,11,12 sont situés l'un au dessus de l'autre et sont séparés d'une distance telle qu'ils sont susceptibles de se déplacer, par l'intermédiaire des arbres 2, sensiblement dans une même aire circulaire en rotation autour de l'axe 21.

Les arbres 2 sont mus chacun en rotation autour de l'axe 21 grâce à un moteur électrique, respectivement 30,31,32, commandé indépendamment des autres par une unité de commande électronique, non représentée, par l'intermédiaire d'une poulie, respectivement 33,34,35, solidarisée à l'extrémité inférieure des arbres 2 et d'une courroie de transmission, respectivement 36,37,38.

Les secteurs 10,11,12 comportent des découpes semi-circulaire 13 pratiquées dans leur extrémité libre et susceptibles de saisir chacune un produit tel qu'une bouteille. La forme des découpes 13 peut évidemment varier en fonction des produits à saisir.

L'unité de commande est programmée pour actionner, au moyen de signaux électriques, les moteurs 30,31,32 afin de donner aux secteurs 10,11,12, par l'intermédiaire des arbres 2, une vitesse ou une accélération déterminées en fonction des différentes phases de formation, de séparation et de transfert des lots de produits.

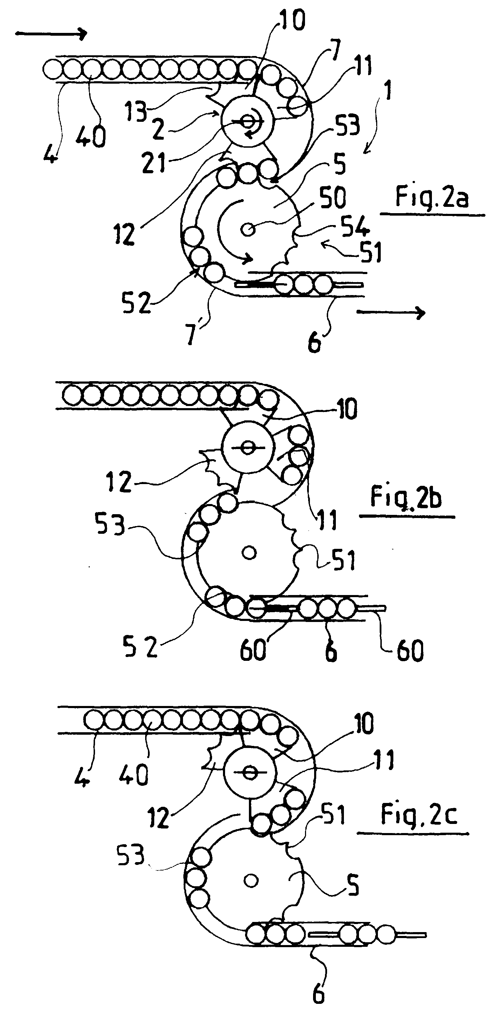

Si on se réfère aux figures 2a, 2b et 2c on peut voir un dispositif 1 que l'on a placé à la sortie d'un convoyeur d'amenée 4 de bouteilles 40 alignées sur une seule rangée, les secteurs 10,11,12 évoluant en rotation dans un plan parallèle au plan dudit convoyeur.

On peut voir également que le dispositif 1 comprend en outre un disque 5 d'axe de rotation 50 parallèle à celui 21 des arbres 2 et tournant en sens contraire, comportant trois séries 51,52,53 de découpes 54 similaires à celles 13 des secteurs 10,11,12 et destinées également à venir en prise avec les produits 40 amenés par le convoyeur 4 après leur prise en charge par les secteurs 10,11,12, de manière à les amener sur un convoyeur de sortie 6, sur lequel ils sont maintenus entre des taquets 60 entraînés par une chaîne ou une courroie non représentée, et dont le sens de déplacement est identique à celui du convoyeur d'amenée 4.

On remarquera que le dispositif 1 comporte également deux guides circulaires 7 et 7' maintenant les produits respectivement dans les découpes 13 des secteurs 10,11,12 et dans les découpes 54 du disque 5 lors de leur rotation.

Les moteurs 30,31,32 sont avantageusement commandés en impulsions électriques, ce qui permet, par comptage desdites impulsions au moyen d'un calculateur numérique intégré dans le système de commande, de déterminer avec précision la position angulaire des secteurs à chaque instant et de bien synchroniser les mouvements des différents éléments du dispositif.

Le fonctionnement du dispositif 1 selon l'invention est le suivant :

Le secteur 10 du dispositif 1 qui se trouve à l'arrivée du convoyeur 4 vient saisir, avec une vitesse nominale sensiblement égale à celle du convoyeur 4, les trois premières bouteilles 40, tandis que le secteur 11 précédant le secteur 10, qui vient de saisir les trois bouteilles 40 précédentes, débute sa phase d'accélération, ce qui a pour effet de créer un espace entre les deux lots de bouteilles, le secteur 12, qui se trouve alors à environ 180° du secteur 10 en phase de saisie des bouteilles, possédant une vitesse sensiblement égale à celle du disque 5 et étant synchronisé avec celui-ci de manière à pouvoir transférer son lot de bouteilles 40 au disque 5, dans les découpes 54 d'une série 53 qui se présente en regard du secteur 12 (figure 2a).

Le secteur 12 qui vient de transférer un lot de bouteilles au disque 5 entre ensuite en phase de décélération jusqu'à ce qu'il atteigne la vitesse nominale de saisie d'un nouveau lot de produits à l'arrivée du convoyeur d'amenée 4, tandis que le secteur 11 suivant le secteur 12 est en phase d'accélération jusqu'au transfert de son lot de bouteilles 40 au disque 5, et que le secteur 10 termine sa phase de saisie des bouteilles 40 (figure 2b).

Enfin, le secteur 10 quitte la phase de saisie des bouteilles et est accéléré, tandis que le secteur 12 débute sa phase de saisie des trois premières bouteilles 40, et que le secteur 11 approche du disque 5 avec une vitesse sensiblement identique à ce dernier et synchronisée avec la série 51 de découpes 54 du disque 5, laquelle se présente en regard dudit secteur 11 (figure 2c).

Les lots de bouteilles 40 ainsi formés sont évacués sur le convoyeur de sortie 6, dans un sens de déplacement identique à celui du convoyeur d'amenée 4.

Si on se réfère maintenant à la figure 3 on peut voir un dispositif 1 associé à deux autres dispositifs identiques disposés l'un à la suite de l'autre avec un décalage latéral constant, cette disposition permettant de former des lots de bouteilles 40 comportant plusieurs rangées côte à côte.

Dans ce cas l'ensemble du dispositif peut comprendre une motorisation commune pour actionner les arbres 2 de chaque dispositif de manière à obtenir un nombre de produits 40 identiques sur toutes les voies et notamment par lots, ou des motorisations séparées pour obtenir des lots de produits 40 disposés en quinconce par exemple, c'est-à-dire en créant un décalage longitudinal des rangées de produits 40 ainsi formées.

Les découpes pratiquées dans les secteurs 10,11,12 peuvent être réalisées dans des pièces solidarisables de manière amovible à l'extrémité desdits secteurs, ce qui permet avantageusement de modifier le nombre d'unités d'un lot de produits 40.

En outre on peut envisager tout autre moyen moteur d'entraînement des arbres 2, tel qu'un dispositif à came, sans pour autant sortir du cadre de l'invention.

On comprendra aisément que le dispositif selon l'invention peut également servir à former une rangée de produits alignés l'un contre l'autre ou faiblement espacés à partir d'une rangée de lots de produits, les paramètres de vitesse et d'accélération des secteurs ainsi que les phases de rapprochement des lots étant alors modifiés en conséquence.

## Revendications

1. Dispositif pour la formation de lots de produits (40) et la séparation desdits lots entre eux, et réciproquement, en vue de leur conditionnement, destiné à être positionné à la sortie d'un convoyeur (4) d'amenée des produits (40) disposés sur une seule rangée, le dispositif comprenant
au moins deux arbres concentriques (2), dont chacun est mu en rotation autour de son axe (21) par un moyen moteur (30,31,32), indépendamment des autres, actionné par un système de commande, chacun desdits arbres (2) étant solidarisé perpendiculairement, à son extrémité, à un secteur (10,11,12) dont l'extrémité libre comporte des découpes (13) dont chacune est apte à venir en prise avec un des produits (40) amenés par le convoyeur (4), de manière que chaque secteur (10,11,12) forme un lot de produits (40), les paramètres de vitesse et d'accélération de chacun desdits secteurs (10,11,12), qui se déplacent l'un après l'autre, étant déterminés par le système de commande suivant les différentes phases de formation et de séparation des lots, à savoir:
- durant la phase de formation d'un lot une vitesse nominale permettant à l'un (10) des secteurs (10,11,12) de saisir un lot de produits (40) tout en imposant sa vitesse au déplacement des produits (40) sur le convoyeur d'amenée (4);
- durant la phase de séparation du lot formé par ce premier secteur (10) une accélération espaçant ledit secteur (10) du secteur (11) qui le suit et qui se trouve en phase de formation d'un autre lot, et amenant le premier secteur (10) à une vitesse déterminée qui lui permet de transférer le lot, après un trajet d'environ 180°, à un convoyeur de sortie (6) ;
le cycle de 360° se terminant en communiquant à nouveau au premier secteur (10) la vitesse nominale de saisie des produits (40), et ainsi de suite.

2. Dispositif selon la revendication 1 caractérisé en ce que le moyen moteur (30,31,32) est un moteur électrique.

3. Dispositif selon la revendication 1 caractérisé en ce que le moyen moteur (30,31,32) est un dispositif à came.

4. Dispositif selon la revendication 1 ou la revendication 2 caractérisé en ce que les découpes (13) sont réalisées dans des pièces solidarisables de manière amovible à l'extrémité des secteurs (10,11,12).

5. Dispositif selon l'une quelconque des revendications précédentes caractérisé en ce que le dispositif comporte en outre un disque (5), disposé tangentiellement aux secteurs (10,11,12), entre ces derniers et le convoyeur de sortie, mu en rotation autour de son axe (50), parallèle aux arbres (2), en sens inverse desdits secteurs, par un moteur commandé par le système de commande, et comportant sur son bord périphérique des découpes (54) similaires à celles (13) desdits secteurs (10,11,12), la vitesse de rotation dudit disque (5) étant commandée par le système de commande de manière qu'il soit synchronisé avec celui des secteurs (10,11,12) qui est en phase de transfert des produits, pour permettre le transfert du lot de produits (40) dudit secteur (10,11,12) sur le convoyeur de sortie (6) dans un sens d'avancement identique à celui du convoyeur d'amenée (4).

6. Dispositif selon l'une quelconque des revendications précédentes caractérisé en ce qu'il est associé à deux autres dispositifs identiques avec un décalage latéral par rapport au flux de sortie des produits (40), de manière à créer des lots de produits (40) groupés sur plusieurs rangées disposées côte à côte.

7. Dispositif selon la revendication 6 caractérisé en ce que les arbres (2) des dispositifs (1) associés sont entraînés par une motorisation commune.

8. Dispositif selon la revendication 6 caractérisé en ce que les arbres (2) des dispositifs (1) sont entraînés par des motorisations séparées.

9. Dispositif selon l'une quelconque des revendications précédentes caractérisé en ce que les lots de produits (40) sont transférés vers le convoyeur de sortie (6) et pris en charge par des moyens de maintien (60) solidaires d'une chaîne ou courroie avançant le long du convoyeur de sortie (6).

10. Dispositif selon la revendication 9 caractérisé en ce que les moyens de maintien sont des taquets (60).

## Patentansprüche

1. Vorrichtung für die Bildung von Produktlosen (40) und zur Trennung dieser Lose untereinander und umgekehrt, zu deren Konditionierung, dazu dienend, am Ausgang eines Förderers (4) zur Beschickung von in einer einzigen Reihe angeordneten Produkten (40) plaziert zu werden, wobei diese Vorrichtung mindestens zwei konzentrische Wellen (2) umfaßt, wobei eine jede dieser Wellen unabhängig von den anderen um ihre Achse (21) durch ein Antriebsmittel (30, 31, 32) bewegt wird, und durch ein Steuerungssystem betätigt wird, wobei jede dieser Wellen (2) im rechten Winkel fest an ihrem Ende an einem Sektor (10, 11, 12) verbunden ist, dessen freies Ende mit Ausschnitten (13) versehen ist, wobei ein jeder der Ausschnitte in der Lage ist, mit einem der Produkte (40) in Kontakt zu treten, die durch den Förderer (4) zugeführt werden, so daß jeder Sektor (10, 11, 12) ein Los von Produkten (40) bildet, wobei die Geschwindigkeits- und Beschleunigungsparameter eines jeden dieser Sektoren (10, 11, 12), welche sich nacheinander bewegen, durch das Steuerungssystem gemäß den unterschiedlichen Phasen der Bildung und Trennung der Lose festgelegt werden, nämlich:
- Während der Losbildungsphase eine Nenngeschwindigkeit, die es einem (10) der Sektoren (10, 11, 12) ermöglicht, ein Los von Produkten (40) zu erfassen, und gleichzeitig seine Geschwindigkeit der Bewegung der Produkte (40) auf dem Zuführförderer (4) aufzuerlegen;
- Während der Trennungsphase des durch diesen ersten Sektor (10) gebildeten Loses, eine Beschleunigung, welche besagten Sektor (10) vom Sektor (11) entfernt, der ihm folgt, und welcher sich in der Bildungsphase eines weiteren Loses befindet, und welche den ersten Sektor (10) auf eine bestimmte Geschwindigkeit bringt, die es ihm ermöglicht, das Los nach einer Strecke von circa 180° an einen Austrittsförderer (6) zu übergeben ;
- der Zyklus von 360° wird beendet, indem dem ersten Sektor (10) erneut die Nenngeschwindigkeit für das Erfassen der Produkte (40) auferlegt wird, und so weiter.

2. Vorrichtung gemäß Anspruch 1, dadurch gekennzeichnet, daß es sich bei dem Antriebsmittel (30, 31, 32) um einen Elektromotor handelt.

3. Vorrichtung gemäß Anspruch 1, dadurch gekennzeichnet, daß es sich bei dem Antriebsmittel (30, 31, 32) um eine mit Nocken versehene Vorrichtung handelt.

4. Vorrichtung gemäß Anspruch 1 bzw. Anspruch 2, dadurch gekennzeichnet, daß die Ausschnitte (13) aus am Ende der Sektoren (10, 11, 12) abnehmbar verbundenen Teilen gebildet werden.

5. Vorrichtung gemäß eines beliebigen der vorgenannten Ansprüche, dadurch gekennzeichnet, daß die Vorrichtung zusätzlich eine Scheibe (5) beinhaltet, welche tangentiell zu den Sektoren (10, 11, 12) zwischen letzteren und dem Austrittsförderer angeordnet ist, wobei diese Scheibe in der Rotation um ihre Axe (50) parallel zu den Wellen (2) in gegenläufiger Richtung zur Laufrichtung besagter Sektoren durch einen durch das Steuerungssystem gesteuerten Motor bewegt wird, und an ihrem äußeren Rand ähnliche Ausschnitte (54) wie diejenigen (13) der Sektoren (10, 11, 12) aufweist, wobei die Drehzahl besagter Scheibe (5) so durch das Steuerungssystem gesteuert wird, daß sie mit derjenigen desjenigen Sektors (10, 11, 12) synchronisiert ist, der sich in der Produktübergabephase befindet, um die Übergabe des Produktloses (40) des besagten Sektors (10, 11, 12) an den Ausgangsförderer (6) in einer Bewegungsrichtung zu gewährleisten, die mit derjenigen des Zuführförderers (4) identisch ist.

6. Vorrichtung gemäß eines beliebigen der vorgenannten Ansprüche, dadurch gekennzeichnet, daß sie mit zwei weiteren identischen Vorrichtungen assoziiert ist, unter einer seitlichen Verschiebung in bezug auf den Produktaustrittsfluß (40), so daß über mehrere Reihen gruppierte, nebeneinander angeordnete Produktlose (40) gebildet werden.

7. Vorrichtung gemäß Anspruch 6, dadurch gekennzeichnet, daß die Wellen (2) der assoziierten Vorrichtungen (1) durch einen gemeinsamen Antrieb angetrieben werden.

8. Vorrichtung gemäß Anspruch 6, dadurch gekennzeichnet, daß die Wellen (2) der Vorrichtungen (1) durch separate Antriebe angetrieben werden.

9. Vorrichtung gemäß eines beliebigen der vorgenannten Ansprüche, dadurch gekennzeichnet, daß die Produktlose (40) an den Ausgangsförderer (6) übergeben und durch Haltemittel (60) übernommen werden, die fest mit einer Kette bzw. mit einem Riemen verbunden sind, und entlang des Ausgangsförderers (6) laufen.

10. Vorrichtung gemäß Anspruch 9, dadurch gekennzeichnet, daß die Haltemittel durch Mitnehmer (60) gebildet werden.

## Claims

1. A device for the forming of batches of products (40) and the separation of the said batches from each other, and vice versa, so that they may be packaged, intended to be positioned at the end of a conveyor (4) which supplies the products (40) arranged in a single line. The device includes :
- at least two concentric shafts (2), each of which is rotated around its axis (21) by a driving device (30, 31, 32) independently of the others, operated by a control system, each of the said shafts (2) being perpendicular to and connected at the end to a sector (10, 11, 12), whose free end includes cut-outs (13), each of which may be grip the products (40) supplied by the conveyor (4), so that each sector (10, 11, 12) forms a batch of products, the speed and acceleration parameters of each of the said sectors (10, 11, 12), which move one after the other, being determined by the control system according to the different phases of formation and separation of the batches, namely :
- during the phase when the batch is being formed a nominal speed allowing one (10) of the sectors (10, 11, 12) to grip a batch of products (40), whilst imposing its speed on the movement of the products (40) on the feeder conveyor (4) ;
- during the separation phase of the batches formed by this first sector (10) an acceleration spacing the said sector (10) from the sector (11) which follows it and which is in the batch formation phase, and bringing the first sector (10) to a determined speed which allows it to transfer the batch, after following a path of approximately 180°, to an exit conveyor (6) ;
the 360° cycle finishes by communicating once again to the first sector 4the nominal speed at which the products are gripped, and so on.

2. Device according to claim 1, characterised in that the driving device (30, 31, 32) is an electric motor.

3. Device according to claim 1, characterised in that the driving device (30, 31, 32) is a device with cams.

4. Device according to claim 1 or claim 2 characterised in that the cut-outs (13) are made in pieces which are connected in a removable fashion to the ends of the sectors (10, 11, 12).

5. Device according to any one of the preceding claims characterised in that the device includes furthermore a disk (5), placed tangentially to the sectors (10, 11, 12), between the latter and the exit conveyor, rotated around its axis (50), parallel to the shafts, in the opposite direction to the said sectors, by a motor controlled by the control system, and including on its peripheral edge cut-outs (54) similar to those (13) of the said sectors (10, 11, 12), the speed of rotation of the said disk (5) being controlled by the control system so that it is synchronised with that of the sectors (10, 11, 12) which is in the product transfer phase, in order to allow the transfer of the batch of products (40) from the said sector (10, 11, 12) onto the exit conveyor (6) in an identical direction to that of the feeder conveyor.

6. Device according to any one of the preceding claims characterised in that it is associated with two other identical devices with a lateral displacement in relation to the outward flow of the products (40), so that batches of products (40) are created, grouped in several rows side by side.

7. Device according to claim 6, characterised in that the shafts (2) of the associated devices (1) are driven by a common drive system.

8. Device according to claim 6 characterised in that the shafts (2) of the devices (1) are driven by separate drive systems.

9. Device according to any one of the preceding claims characterised in that the batches of products (40) are transferred to the exit conveyor (6) and picked up by means of support (60) integral with a chain or belt advancing along the exit conveyor (6).

10. Device according to claim 9 characterised in that the means of support are wedges (60).
